# EUROPEAN PATENT SPECIFICATION

(11) **EP 3 334 011 B1**
(45) Date of publication and mention of the grant of the patent: **25.03.2020**
(21) Application number: 17205826.5
(22) Date of filing: 07.12.2017
(51) Int. Cl.: H02K 1/24, H02K 3/52, H02K 3/18, H02K 15/095, H02K 3/34, H02K 3/32

(54) **SALIENT POLE ROTORS AND METHODS FOR WINDING ROTOR COILS THEREON**
SCHENKELPOLLÄUFER UND VERFAHREN ZUM AUFWICKELN VON ROTORSPULEN DARAUF
ROTOR À PÔLES SAILLANTS ET PROCÉDÉS POUR ENROULER DES BOBINES DE ROTOR SUR CELUI-CI

(30) Priority: 08.12.2016 GB 201620862
(43) Date of publication of application: 13.06.2018
(73) Proprietor: GE Energy Power Conversion Technology Ltd, Rugby Warwickshire CV21 1BU (GB)
(72) Inventor: NIES, Jacob Johannes, 48499 Salzbergen (DE); POMFRET, John Martin, Rugby, Warwickshire CV21 1BD (GB)
(74) Representative: Serjeants LLP

(56) References cited:
- GB-A- 2 241 836
- JP-A- 2003 009 433
- JP-A- 2005 354 804
- JP-A- 2009 095 233

## Description

### TECHNICAL FIELD

The present invention relates to salient pole rotors for electrical machines (e.g., motors and generators), and in particular to salient pole rotors with integral pole tips and where rotor coils can be wound on the pole bodies *in-situ.*

### BACKGROUND ART

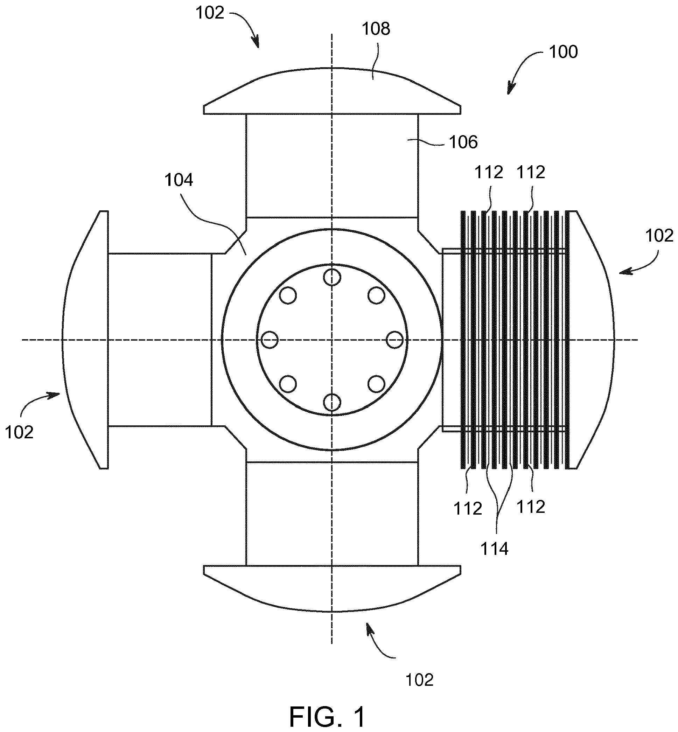

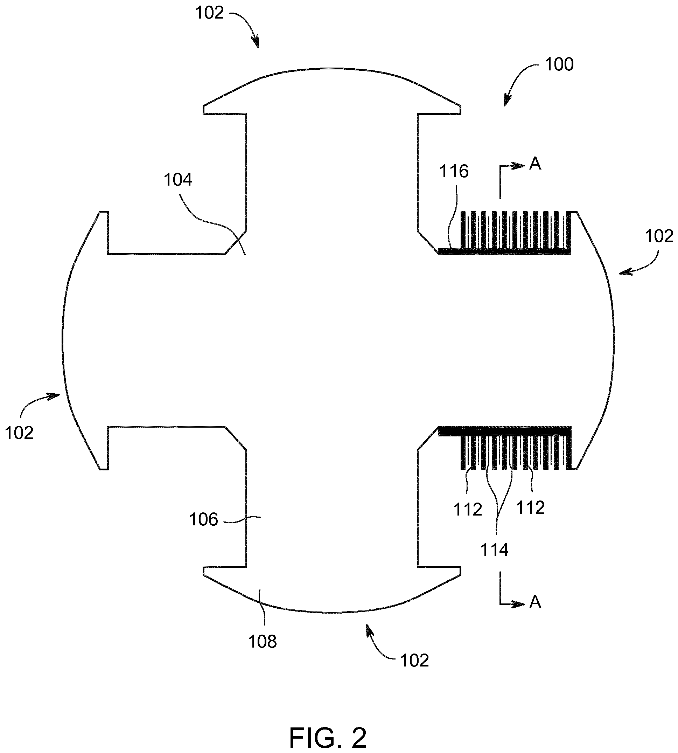

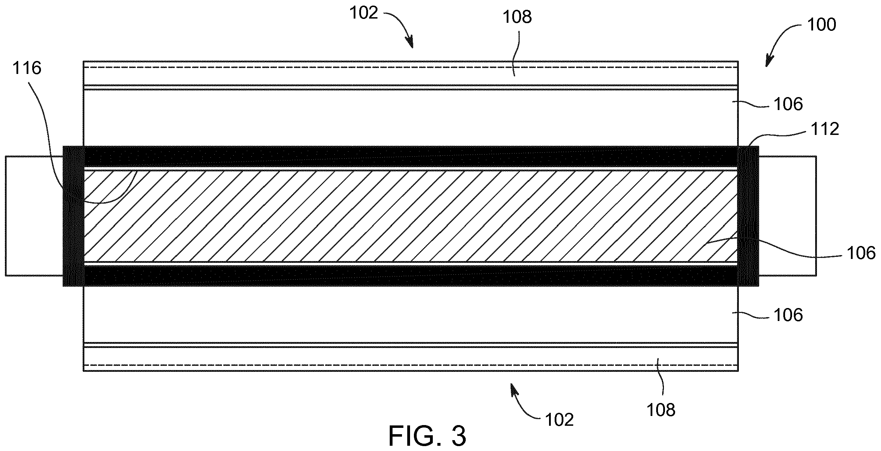

With reference to Figures 1 to 3, a salient pole rotor 100 for an electrical machine has a plurality of poles 102 that project radially outwardly from the rotor core 104. Each pole 102 has a pole body 106 and a pole tip 108 (or shoe). The pole tips 108 can be integral with the respective pole body 106 or fixedly secured to the pole body using pole screws.

The rotor winding includes a plurality of coils 110, each coil being located on a respective pole body 106 and supported by the pole tip 108 to ensure that they are firmly held against the pole during normal service conditions. Only one coil 110 is shown in Figures 1 to 3 for simplicity. But it will be readily understood that the rotor will include multiple coils. If the rotor has integral pole tips, and the coils are constructed as conductive flat strips, the coils are typically made of segments that are positioned around each pole body and then brazed together. However, if the rotor has separate pole tips, the coils can be pre-formed remote from the rotor (i.e., as a completely separate manufacturing process) and mounted on the pole bodies before the pole tips are fixedly secured to the pole bodies.

A so-called 'strip-on-edge' coil is formed from a plurality of turns of a conductive strip 112, typically copper, wound on edge, i.e., so that the narrow surfaces of the strip are orientated substantially parallel to the axis of the pole body 106 and its broad surfaces are facing each other. Suitable insulation is typically provided between each turn of the coil (i.e., inter-turn insulation 114) and between the coil and the surrounding parts such as the pole tip 108, the pole body (i.e., back insulation 116), and clamping parts below or beside the coil (not shown).

Brazing the coil segments on the pole bodies can be costly because the insulation can be damaged by the brazing heat and thus precautions against such damage are needed. There is also a need for the coils and the adjacent area of the poles to be cleaned carefully after the brazing process has been completed. On the other hand, using separate pole tips, which allow pre-formed coils to be located on the pole bodies, places significant physical restrictions on the rotor design. In particular, there is a limit on the force that can be applied to the pole screws, which in turn limits the operating speed and/or diameter of the rotor and hence the torque that can be provided by the electrical machine.

Accordingly, there is a need for an improved design of salient pole rotor and an improved method of forming coils *in-situ* on pole bodies with integral pole tips.

GB 2241836 discloses a slot insulator for a rotor core.

JP 2003-009433 discloses a rotary electric machine.

JP 2009-095233 discloses a motor and manufacturing method thereof.

### SUMMARY OF THE INVENTION

The present invention provides a salient pole rotor for an electrical machine (e.g., a motor or generator) according to claim 1.

The term 'turn' is used herein to define a loop of electrically conductive material (e.g., a conductive strip - see below) that extends around the pole body.

The coil winding part of each pole body includes an undercut extending along at least part of a side surface and at least part of an end surface of the pole body. In particular, each pole body can include two substantially planar axially-extending side surfaces (i.e., surfaces that are orientated substantially parallel to the longitudinal axis of the rotor) and two end surfaces. The end surfaces of each pole body can have any suitable shape. In one arrangement, the end surfaces are curved. Each curved end surface can optionally include a substantially planar end surface (i.e., a surface that is orientated substantially perpendicular to the longitudinal axis of the rotor) with curved transition surfaces between the substantially planar end surface and the side surfaces. Such an end surface is to be considered to be a curved end surface for the purposes of the present invention.

The undercut can be provided in the form of a continuous shaped channel or recess that extends into the outer surface of the pole body and can have any suitable width, length and depth - it typically being the case that the depth of each channel or recess will vary along its length to define a particular profile for shaping each turn of the coil as it is wound *in-situ* around the coil winding part. The shaped channel or recess can extend from a first point on an end surface of the pole body to a second point on a side surface. The width of each undercut will be sufficient to receive the turn and where appropriate the components of the coil winding apparatus necessary for gripping or manipulating the conductive material that is bent around the pole body to form the turn. In some arrangements, the width of the undercut can exceed the minimum width needed to physically receive the coil and can actually extend along a significant proportion of the pole body.

The coil winding part of each pole body can include two undercuts, namely a first undercut extending along part of a first side surface and part of a first end surface and a second undercut extending along part of a second side surface and part of a second end surface. The first undercut will define a particular profile for shaping each turn of the coil as it is bent around the first end surface and the second undercut will define a particular profile for shaping each turn of the coil as it is bent around the second end surface. The outer profile of the coil winding part of each pole body can therefore be defined by the shaping profile of each undercut and any interposing parts of the outer surface of the pole body. There will preferably be a significant difference between the inner profile of each turn of the wound coil and the outer profile of the coil winding part to the extent that there is a deliberate and appreciable deviation between the two profiles for the purpose of over-bending the conductive material during the *in-situ* winding process and not merely a minor or immaterial deviation that might be characterised by normal engineering tolerances or manufacturing imperfections, for example.

A suitably-located undercut provided in the pole body can also have the function of lowering the stresses at the transition from pole body to pole tip which occur due to the rotation mass of the respective wound coil pressing against the overhanging part of the pole tip.

It will be readily understood that the coil winding part is the part of the pole body around which the turns of the coil are wound *in-situ* during a winding process, i.e., it acts as a mandrel. The coil winding part can be located substantially adjacent the pole tip or substantially adjacent the base of the pole body where the pole body joins the rotor core. As described in more detail below, after each turn of the coil has been wound around the coil winding part, the partially-wound coil - comprising the just-formed turn together with any previously formed turn(s) - can be moved axially along the pole body (i.e., radially with respect to the rotor axis) to free up the coil winding part and to allow another turn to be wound around it. To free up the coil winding part, the partially-wound coil can be moved towards the base of the pole body or towards the pole tip depending on the location of the coil winding part. In some arrangements, the partially-wound coil can remain stationary on the pole body if the conductive material feeding apparatus is adapted to feed the conductive material to the desired location and the coil winding part extends along a sufficient extent of the pole body to allow multiple turns to be wound around it.

Each pole body further includes a coil mounting part on which the respective coil is at least partially mounted in use. Each wound coil is typically positioned adjacent the respective pole tip so that it is as close as possible to the air gap between the rotor and the stator. When the winding process has finished, the fully-wound coil is moved axially along the pole body to a final mounting position. The coil mounting part has an outer profile that differs from the outer profile of the coil winding part and is defined by part of the pole body that does not include any undercut(s).

Each coil is preferably a so-called 'strip-on-edge' coil having a helical structure with a plurality of turns stacked along the axis of the pole body. Each coil is wound *in-situ* on the respective pole body and includes a plurality of turns of a continuous conductive strip (e.g., copper) wound on edge so that the narrow surfaces of the strip are orientated substantially parallel to the axis of the pole body and its broad surfaces are facing each other. Forming the coils *in-situ* around the coil winding part of the pole body means that the rotor can utilise integral pole tips and it also avoids the additional costs that can arise from brazing coil segments on the pole body.

Inter-turn insulation is normally provided between the broad surfaces of adjacent turns of each coil. Insulation is also normally provided between each coil stack and the respective pole body (so-called back insulation) and the pole tip so that the coils are electrically insulated from the rotor. The back insulation can be positioned on the pole body before the coil winding process is started and will typically not extend onto the coil winding part such that the turns are wound directly around the outer surface of the pole body as opposed to being wound around the outer surface of any back insulation. However, in some arrangements, the turns can be wound around an interposing component forming part of the pole body at least during the winding process, that interposing component optionally being back insulation, and where the outer surface of the interposing component defines a particular profile for shaping each turn of the coil as it is wound *in-situ* around the coil winding part. Axial movement of the partially-wound coil along the pole body after each successive turn is wound around the coil winding part can move the coil onto the pre-positioned back insulation.

In some arrangements, there may be one or more voids between the wound coil and the pole body. The void(s) can preferably be filled with insulation material, non-insulation material, or a combination thereof.

The inner profile of each wound coil can correspond substantially to the outer profile of the coil mounting part of the respective pole body. When mounted, each wound coil is typically spaced apart from the respective pole body only by the thickness of the back insulation that electrically insulates the coil from the rotor. But in some arrangements ventilation channels may be provided between the coil and the back insulation such that the coil is spaced farther apart from the pole body at certain locations. The turns of each coil can also be staggered to provide 'finned' areas for cooling.

In one arrangement, the back insulation that electrically insulates the wound coil from the rotor can have an outer profile that corresponds substantially to, or complements, the inner profile of the coil, e.g., to compensate for any variation in the bent conductive material. The inner profile of the back insulation can correspond substantially to the outer profile of the pole body and can optionally be used to fill any undercut(s) in the outer surface of the pole body or any other void(s) between the coil and the pole body.

In one arrangement, part of the coil can be mounted on the coil winding part, with the remainder of the coil being mounted on a coil mounting part. In particular, once a coil has been formed *in-situ* on the pole body by the winding process, the fully-wound coil (typically together with the back insulation) can be moved along the pole body to its final mounting position. This can mean that in its final mounting position the coil covers the coil winding part of the pole body. Any undercut(s) or other void(s) between the pole body and the respective coil (or between the pole body and the back insulation that electrically insulates the coil from the rotor) can be filled with one or more parts which can be of a suitable insulation material, non-insulation material, or a combination thereof, so that the coil is properly supported, cooled and insulated.

During the coil winding process, as each turn is wound around the coil winding part of the respective pole body, it is bent to take on the shape that is defined by the outer profile of the coil winding part. The conductive material is forced into each undercut such that the axially-extending sides of the turn are not parallel but follow the shaped profile of each undercut. The conductive material can be forced into each undercut by the application of a winding force. The winding force can include one or more of a tensioning force (i.e., a force applied along the longitudinal axis of the conductive material), a side force (i.e., a force towards the pole body or generally perpendicular to the conductive material) which acts to bend the conductive material in the same plane as the bending is to take place, and a bending moment.

In its final desired shape, the axially-extending sides of the turn are substantially straight and parallel. The outer profile of the coil winding part is selected to effectively over-bend each turn as it is wound around the coil winding part in such a way that each turn adopts the final desired shape only *after* the winding force is released. The outer profile of the coil winding part is also selected to avoid plastically deforming the axially-extending sides of the coil. Each turn retains the shape that is defined by the profile of the coil winding part, and which deviates from the final desired shape, until the winding force is released. In this retained shape, the axially-extending sides of each turn are not substantially parallel but are deliberately over-bent inwards to an extent that is determined by the outer profile of the coil winding part. After the winding force is released, the turn will assume its final desired shape where its axially-extending sides are substantially parallel as a result of natural spring back. This means that the turn is no longer engaged with the undercut(s) in the coil winding part, for example, and the coil can move without hindrance along the axis of the pole body towards the pole tip or the pole body base, as appropriate, to allow the next turn to be wound around the coil winding part.

The winding process continues until the desired number of turns have been formed. Each fully-wound coil has an appropriate number of turns according to the rotor design.

Sometimes the axially-extending sides of the turn may end up not being substantially parallel as a result of natural spring back when the winding force is released. In particular, natural spring back may result in one of the sides of the turn being angled away from the pole body side surface. In this case, the turn can optionally be bent elastically away from the pole body and then one or more additional bending moments can be applied to the conductive material at one or more locations to plastically bend it back towards the pole body. The turn will then assume its final desired shape with substantially parallel axially-extending sides.

The rotor can have any suitable number of poles circumferentially spaced around the centre line.

The present invention further provides a method of winding a strip-on-edge coil according to claim 7.

The outer profile of the coil winding part is selected to over-bend the conductive strip to provide each turn of the coil with its final desired shape after an applied winding force is released and preferably without plastically deforming the parts of the coil that are be located adjacent the side surfaces of the pole body when the coil is properly mounted for use.

The conductive strip is preferably wound under tension, i.e., a tensioning force is applied along the longitudinal axis of the conductive strip. Additionally or alternatively, one or both of a side force and a bending moment is applied to the conductive strip as it is wound around the pole body, typically when the conductive strip is being bent around the end surface of the pole body or the outer surface of a removable member, for example.

The conductive strip (e.g., copper) is wound on edge so that the narrow surfaces of the strip are orientated substantially parallel to the axis of the pole body and its broad surfaces are facing each other. Applying the tensioning force to the conductive strip prevents the thickness of the inner part of the conductive strip from increasing as a result of it being bent around the end surfaces of the coil winding part.

The winding process can be carried out until each coil has the desired number of turns stacked along the axis of the pole body.

A conductive strip feeding apparatus can be provided. In one arrangement, the conductive strip feeding apparatus remains stationary and the rotor is rotated relative to the stationary conductive strip feeding apparatus. The rotor can be supported on a suitable platform or support during the coil winding process that optionally allows for lateral movement between the rotor and the stationary conductive strip feeding apparatus. In another arrangement, the rotor remains stationary and the conductive strip feeding apparatus is rotated relative to the rotor.

The conductive strip can be supported on a spool and supplied to the conductive strip feeding apparatus. The conductive strip feeding apparatus can include one or more of:
- a tensioning device to selectively apply the tensioning force to the conductive strip,
- a straightening device to straighten the conductive strip,
- a knurling device to knurl or texture at least one of the outer surfaces of the conductive strip to provide a larger convection area, and
- a flattening device to flatten the conductive strip.

A coil winding apparatus can be provided to control the bending of the conductive strip around the coil winding part of the pole body. The coil winding apparatus can include one or more of:
- guides for guiding the conductive strip (e.g., to maintain the conductive strip in the 'on edge' orientation as it is wound around the pole body and prevent it from twisting),
- rollers, clamps or other devices to apply the side force and/or the tensioning force to the conductive strip, and
- rollers, grippers or other devices to grip the conductive strip and/or apply a bending moment to the conductive strip at one or more locations.

### DRAWINGS

Figure 1 is an end view of the salient pole rotor;
Figure 2 is a radial cross section of the salient pole rotor of Figure 1;
Figure 3 is an axial cross section of the salient pole rotor along line A-A of Figure 2;
Figure 4 is a cross section through a salient pole of a salient pole rotor according to the present invention;
Figure 5 is a cross section through an alternative salient pole of a salient pole rotor according to the present invention;
Figure 6 is a cross section through the salient pole of Figure 5 along line B-B;
Figure 7 is a cross section showing an alternative end surface for the salient pole of Figure 5;
Figure 8 is a cross section through the salient pole of Figure 5 showing one end surface and undercut in more detail;
Figures 9 to 11 are cross sections showing the individual turns of a coil being wound *in-situ* on the salient pole of Figure 5;
Figure 12 is a cross section showing a fully-wound coil on the salient pole of Figure 5 in its mounting position;
Figure 13 is a side view of the fully-wound coil of Figure 12;
Figure 14 is a cross section showing an alternative fully-wound coil on the salient pole of Figure 5 in its mounting position;
Figures 15A to 15C show steps in a coil winding process not according to the present invention for comparative purposes;
Figures 16A to 16C show steps in a coil winding process according to the present invention;
Figures 17A to 17D show steps in an alternative coil winding process according to the present invention;
Figure 18 is a cross section through a salient pole of an alternative salient pole rotor that does not form part of the present invention that uses removable members to define the outer profile of the coil winding part;
Figure 19 is a cross section through the salient pole of Figure 18 showing one of the removable members in more detail;
Figure 20 is a cross section through the salient pole of Figure 18 after the void between the coil and the pole body has been filled;
Figure 21 is a cross section through the salient pole of Figure 19 along line C-C;
Figure 22 is a detail view of a removable member and a tool that provides side support as the conductive strip is being wound;
Figure 23 is a cross section through the salient pole of Figure 19 showing a coil support member;
Figure 24 is a cross section showing an alternative removable member that does not form part of the present invention with a non-slip groove in its outer surface;
Figure 25 is a cross section showing an alternative removable member that does not form part of the present invention with a two-part construction;
Figure 26 is a cross section showing alternative coil support members that do not form part of the present invention;
Figure 27A shows a cross section of a conductive strip after bending without a tensioning force being applied;
Figure 27B shows a cross section of a conductive strip after being with a tensioning force being applied; and
Figure 28 is a schematic diagram of a conductive strip feeding apparatus.

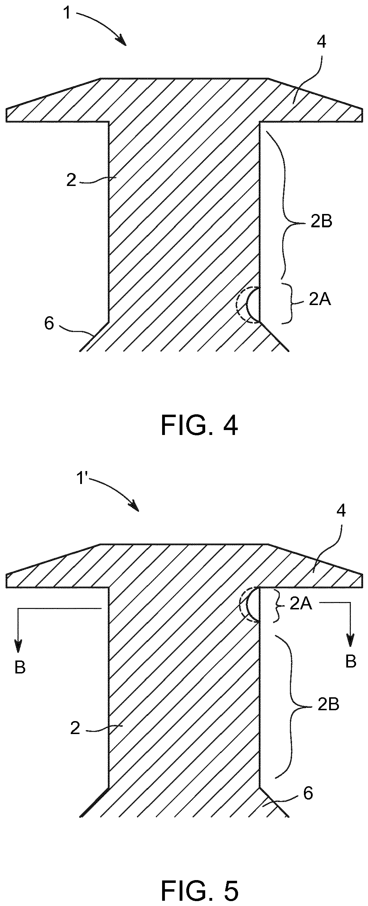

Figure 4 shows a cross section through a pole 1 of a salient pole rotor according to the present invention. The salient pole rotor forms part of an electrical machine, e.g., a motor or generator (not shown). The pole 1 includes a pole body 2 that extends radially outwardly from the rotor core and a pole tip 4 that is integral with the pole body.

The pole body 2 includes a coil winding part 2A and a coil mounting part 2B. In Figure 4 the coil winding part 2A is defined by a region at the base of the pole body 2, adjacent the point where the pole body 2 meets the rotor core 6. An alternative pole 1' is shown in Figure 5 where the coil winding part 2A is defined by a region adjacent the pole tip 4.

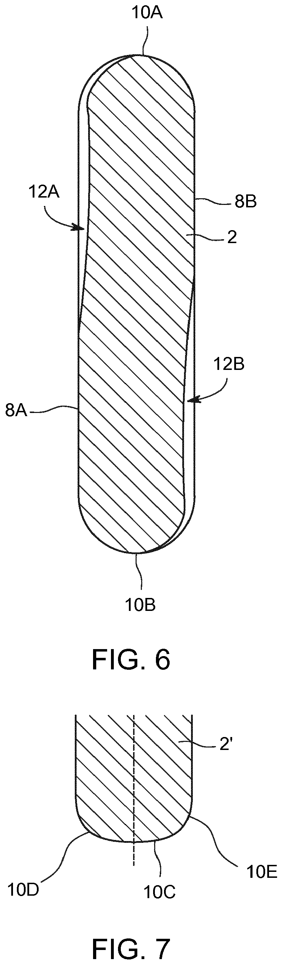

Figure 6 is a cross section through the coil winding part 2A of the pole body 2 along line B-B. The outer profile of the pole body 2 includes two substantially planar axially-extending side surfaces 8A, 8B (i.e., surfaces that extend parallel to the rotor axis) and two curved end surfaces 10A, 10B. Figure 7 is a cross section through an alternative pole body 2' where each curved end surface includes a substantially planar end surface 10C (i.e., a surface that extends perpendicular to the rotor axis) and curved transition surfaces 10D, 10E.

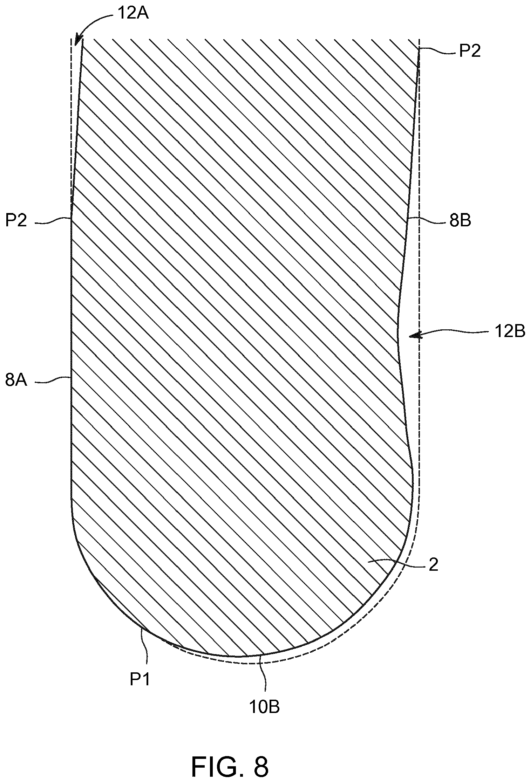

The coil winding part 2A extends peripherally around and axially along part of the pole body 2 and includes two undercuts 12A, 12B which are formed as shallow channels or recesses in the outer surface of the pole body 2. Similarly, the coil mounting part 2B extends peripherally around and axially along the remaining part of the pole body 2. With particular reference to Figure 8, the undercut 12B extends from a first point P1 on the curved end surface 10B to a second point P2 on the side surface 8B. Only part of the other undercut 12A is shown in Figure 8 but would similarly extend between corresponding first and second points. The depth of each undercut 12A, 12B relative to the outer surface of the remainder of the pole body 2 varies between the first and second points P1, P2 as shown in Figure 8 to define a particular profile for shaping each turn of the coil as it is wound *in-situ* around the coil winding part 2A. The outer profile of the coil winding part 2A of the pole body 2 is defined by the solid line and includes the interposing parts of the side surfaces 8A, 8B as well as the shaping profiles defined by the undercuts 12A, 12B. The dashed lines in Figure 8 indicate the outer profile of the remainder of the pole body, i.e., the coil mounting part 2B. It can therefore be seen that the outer profiles of the coil winding part 2A and the coil mounting part 2B, as defined respectively by the dashed and solid lines, are different.

Each coil 16 includes a plurality of turns of a continuous conductive strip (e.g., copper) wound on edge so that the narrow surfaces of the strip are orientated substantially parallel to the axis of the pole body 2 and its broad surfaces are facing each other. Each coil 16 is therefore a so-called 'strip-on-edge' coil.

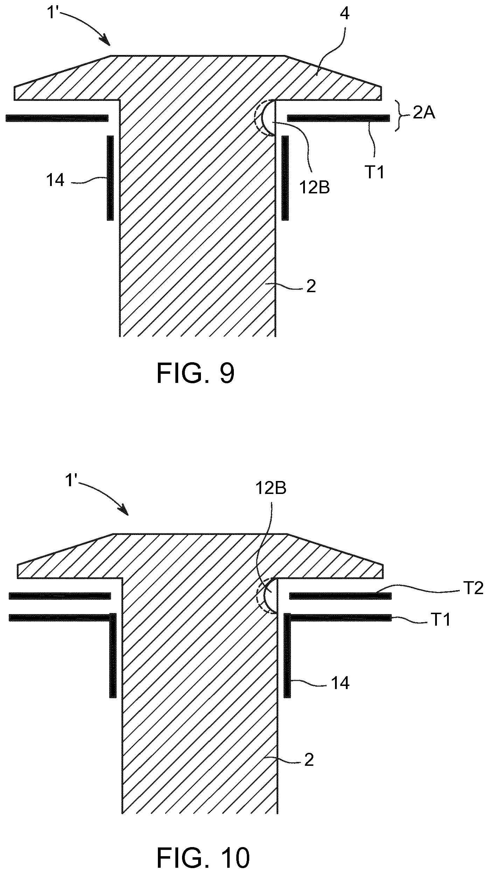

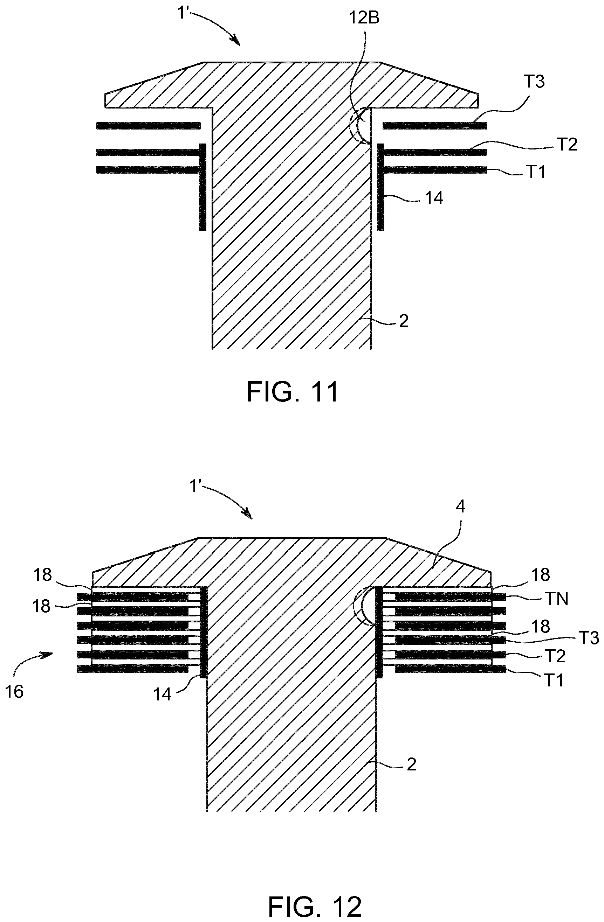

Each turn is wound directly around the outer surface of the pole body 2. Figure 9 shows a first turn T1 wound around the coil winding part 2A of the pole body 2. (It will be readily understood that Figures 9 to 11, in particular, are not drawn to scale and are intended only to illustrate the steps of the coil winding process. In particular, the relative position of each turn, the spacing between adjacent turns, and the spacing between each turn and the pole body, is not intended to be indicative of an actual pole.) In Figure 9, the first turn T1 has been formed by bending the conductive strip around the coil winding part 2A and the winding force has been released such that the first turn has assumed its final shape with its axially-extending sides substantially parallel as a result of natural spring back and is no longer positioned within the undercuts 12A, 12B - see the description below for further detail. After the winding force has been released, the first turn T1 is moved axially along the pole body 2 towards the rotor core and on to the back insulation 14 that is pre-positioned on the pole body. This movement of the first turn T1 frees up the coil winding part 2A to allow a second turn to be bent around it. Figures 10 and 11 show second and third turns T2, T3 being wound around the coil winding part 2A of the pole body 2, respectively. The coil winding process is continued until the coil has the desired number of turns. Although Figures 9 to 11 show a coil winding part 2A located adjacent the pole tip 4, it will be understood that the coil winding part can be located adjacent the base of the pole body 2 such that each formed turn is moved axially along the pole body towards the pole tip, or at any intermediate position such that each turn is moved axially along the pole body towards either the base or the pole tip as appropriate. The inter-turn insulation has been omitted from Figures 9 to 11 for reasons of clarity. The inter-turn insulation can be inserted between adjacent turns as they are formed during the winding process, but is preferably inserted into the fully-wound coil as a separate step because it leaves more space for forming the conductive strip on the coil winding part 2A. Movement of the turns along the pole body during the winding process should therefore ensure there is sufficient space between adjacent turns to allow for the insertion of the inter-turn insulation.

The coil winding part 2A is defined by the width of the undercuts 12A, 12B which is sufficient to receive a single turn of the conductive strip and any tools or equipment needed to bend, grip or manipulate the conductive strip during the winding process. But in an alternative pole body, the coil winding part could extend along a significant proportion of the pole body, i.e., there could be a very small coil mounting region or actually no coil mounting region at all. This would avoid the need to move the coil along the pole body after each turn has been formed if the conductive strip feeding equipment can flex the conductive strip feed to the right location.

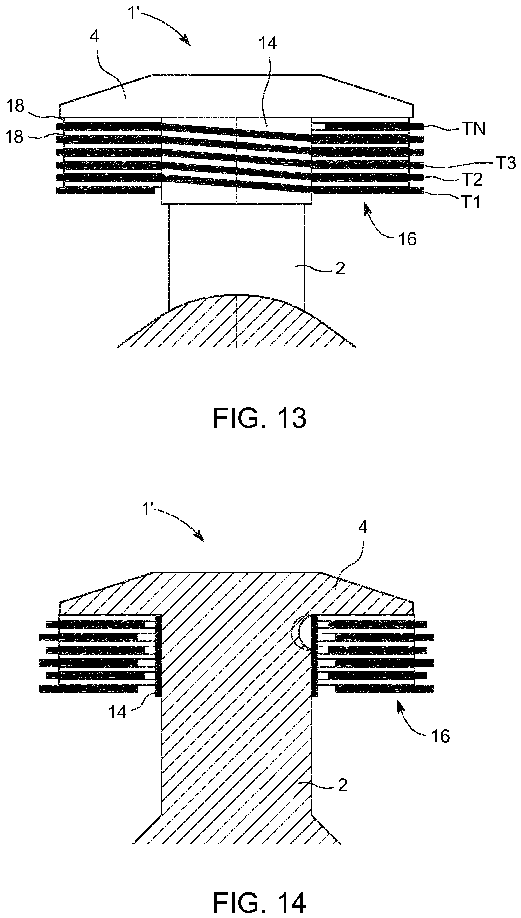

In Figures 12 and 13 the fully-wound coil 16 is shown in its final mounting position. In particular, the coil 16 and the back insulation 14 have been moved towards the pole tip 4 such that the coil is positioned on the coil winding part 2A and on part of the coil mounting part 2B of the pole body 2. In other words, the coil 16 can be mounted over the coil winding part 2A of the pole body 2 once the winding process has been completed. Such coil positioning takes account of the fact that the *in-situ* winding process is often most conveniently carried out if the coil winding part 2A of the pole body 2 is adjacent the pole tip 4 where there is best clearance from the adjacent pole body, and that the coil 16 often needs to be positioned adjacent the pole tip 4 for support against rotational forces and to be as close as possible to the air gap of the electrical machine. The coil 16 is typically in abutment with the pole tip 4 and is electrically isolated from it by insulation.

Figure 13 shows how one of the curved ends of each turn defines an angled transition between adjacent turns such that the turns are stacked along the axis of the pole body 2 with the axially-extending sides and the other curved end of each turn lying in the same plane. The angled transition is formed by moving the coil axially along the pole body 2 or by suitable feeding of the conductive strip during the winding process.

Figure 14 shows how alternate turns of each coil 16 can be staggered to provide cooling fins on the outer surface or cooling channels between the coil and the back insulation 14, for example.

Inter-turn insulation 18 is shown in Figures 12 to 14 between the individual turns of the coil 16.

The undercuts 12A, 12B can be left unfilled (i.e., so that there are voids between the back insulation 14 and the pole body 2 in the coil spacing part 2A) or filled with a suitable material, e.g., an insulation material and/or a non-insulation material. In one arrangement, the back insulation can be shaped to fill the voids.

The process of winding each turn around the coil winding part of the pole body will now be described.

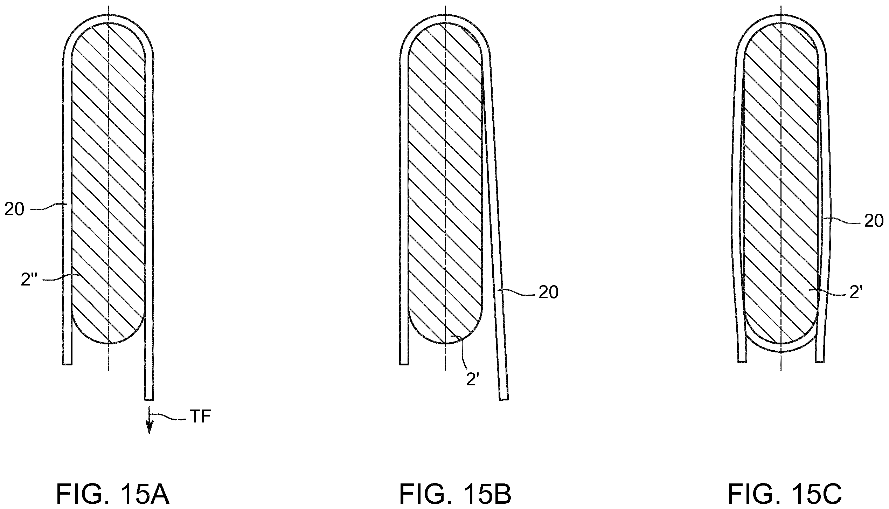

For comparative purposes, Figures 15A to 15C show a conductive strip 20 being bent around a pole body 2" without undercuts. In Figure 15A, the conductive strip 20 is shown bent around one curved end surface and a tensioning force (represented by the arrow TF) is being applied along the longitudinal axis of the conductive strip to tension it. The axially-extending sides of the turn are parallel and lie against the side surfaces of the pole body 2". Figure 15B shows the conductive strip 20 after the tensioning force has been released. It can be seen that the conductive strip 20 springs away from the side of the pole body 2". In Figure 15C, the conductive strip 20 is shown bent around both curved end surfaces to form a complete turn and the tensioning force has been released. The axially-extending sides of the turn are parallel when the tensioning force is being applied, but when the tensioning force is released, the sides naturally spring away from the pole body 2" such that they are not parallel but are bowed outwardly as shown. It will be readily understood that such bowed sides are not substantially straight or parallel as in the present invention.

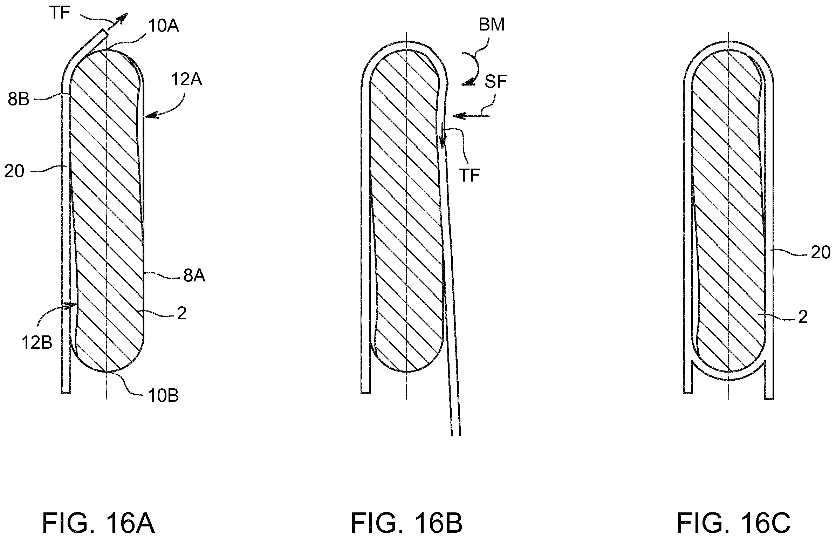

Figures 16A to 16C show a conductive strip 20 being bent around the coil winding part 2A of a pole body 2 with undercuts 12A, 12B. Figure 16A shows the conductive strip 20 starting to be bent around the curved end surface 10A. Figure 16B shows how the conductive strip 20 is forced into the undercut 12A by the application of a winding force comprising one or more of a side force (represented by the arrow SF), a tensioning force that is applied along the longitudinal axis of the conductive strip (represented by the arrow TF) and a bending moment (represented by arrow BM). In Figure 16C the conductive strip 20 is shown bent around both curved end surfaces 10A, 10B to form a complete turn and the winding force has been released. It will be understood that the conductive strip 20 would also have been forced into the undercut 12B by the application of winding force as it is bent around the curved end surface 10B. Because the conductive strip 20 is forced into the undercuts 12A, 12B, the axially-extending sides of each turn are initially not parallel but follow the shaped profile of the undercuts. Once the winding force is released as shown in Figure 16C, the axially-extending sides of the turn naturally spring away from the pole body 2 but because the conductive strip 20 has effectively been over-bent by being forced into the undercuts 12A, 12B so that the sides are bent inwardly by the outer profile of the coil winding part of the pole body 2, the sides of the turn become parallel and are not bowed outwardly. The natural spring back moves the sides of the turn away from the pole body 2 and out of the undercuts 12A, 12B. Consequently, there is no interference when the turn is moved axially along the pole body 2 to free up the coil winding part 2A so that the next turn can be bent around it.

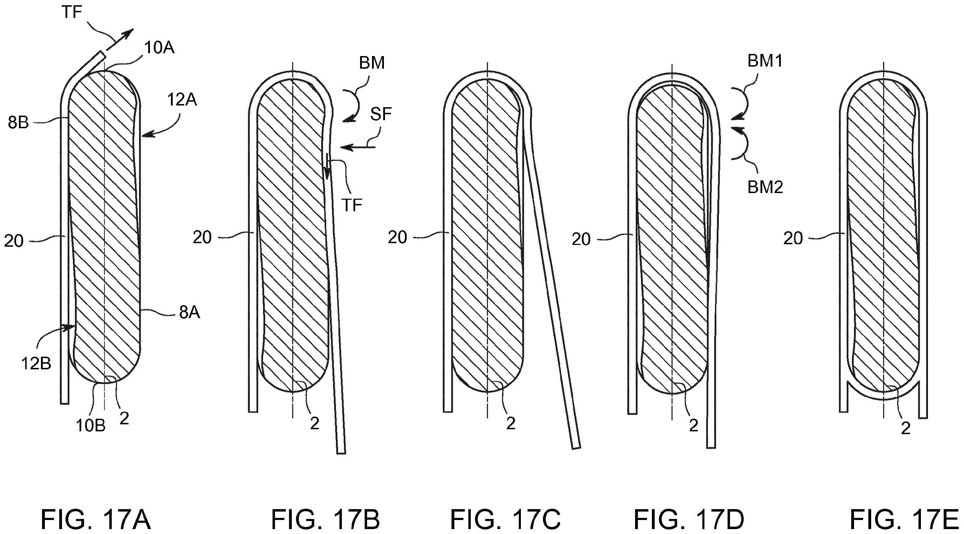

Sometimes the axially-extending sides of the turn may not be substantially parallel after natural spring back. Figures 17A to 17E show how, in this case, each turn can optionally be bent elastically away from the pole body 2 and then bending moments (represented by arrows BM1 and BM2) can be applied to the conductive strip 20 at separate locations to plastically bend it back towards the pole body 2. The bending moments can have different magnitudes and are applied such that the turn assumes its final desired shape, with parallel axially-extending sides.

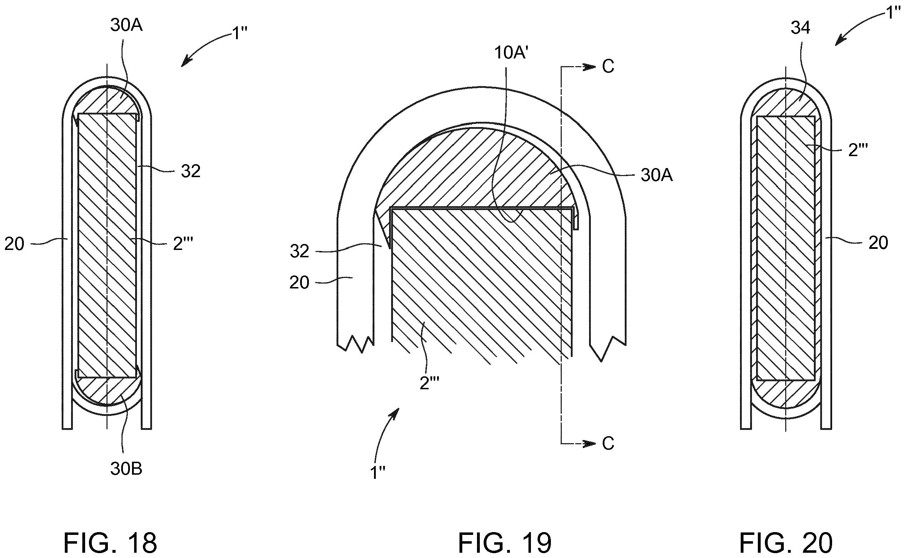

Figure 18 shows a cross section through an alternative pole 1" of a salient pole rotor that does not form part of the present invention. The salient pole rotor forms part of an electrical machine, e.g., a motor or generator (not shown). The pole 1" includes a pole body 2"'. A first removable member 30A is located at a first end of the pole body 2'" and a second removable member 30B is located at a second end of the pole body. The removable members 30A, 30B define a coil winding part of the pole having an outer profile around which the conductive strip 20 is bent. As shown in Figure 19, each removable member 30A, 30B has an asymmetric outer profile to over-bend the conductive strip 20 to compensate for natural spring back.

There is a void 32 between the turn defined by the bent conductive strip 20 and the pole body 2"'. Once the coil winding process has finished the removable members 30A, 30B are removed from the pole body 2"'. The void 32 then additionally includes the space previously occupied by the removable members. The coil is centred on the pole body 2'" and the void 32 is filled with a suitable material 34, e.g., an insulation material, non-insulation material, or a combination thereof. The fully-filled void shown in Figure 20.

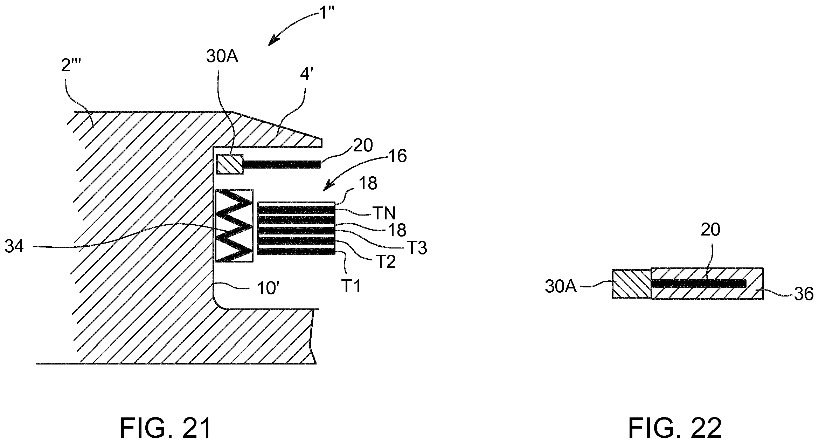

Figure 21 shows how each turn can be moved axially along the pole body 2'" and onto a coil support member 34 to free up the removable members 30A, 30B and allow the next turn to be bent around them. The coil support member 34 is formed from a suitable material, e.g., an insulation material, non-insulation material or a combination thereof. When the coil winding process has finished, and the removable members 30A, 30B have been removed, the fully-wound coil 16 can be moved axially towards the pole tip 4'. The coil support member 34 can also be moved with the coil, or can remain stationary relative to the pole body 2"'.

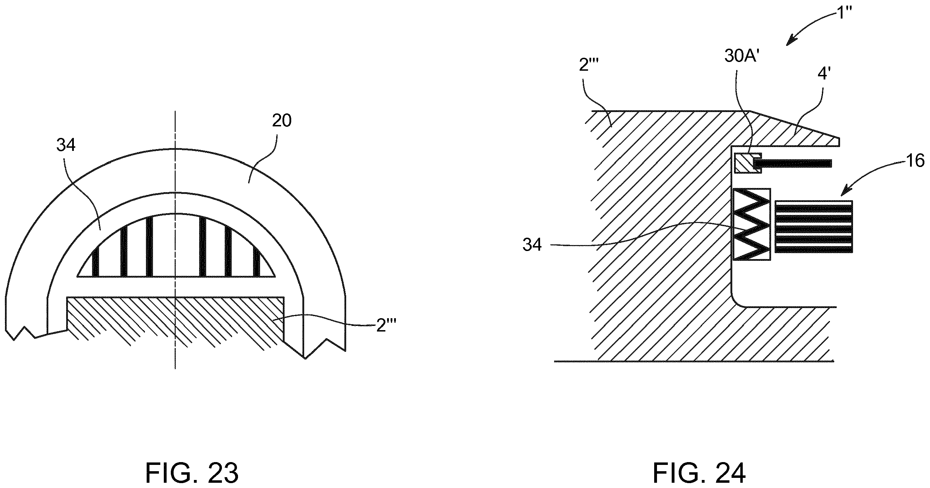

The coil support member 34 can have include internal voids or spaces as shown in Figure 23.

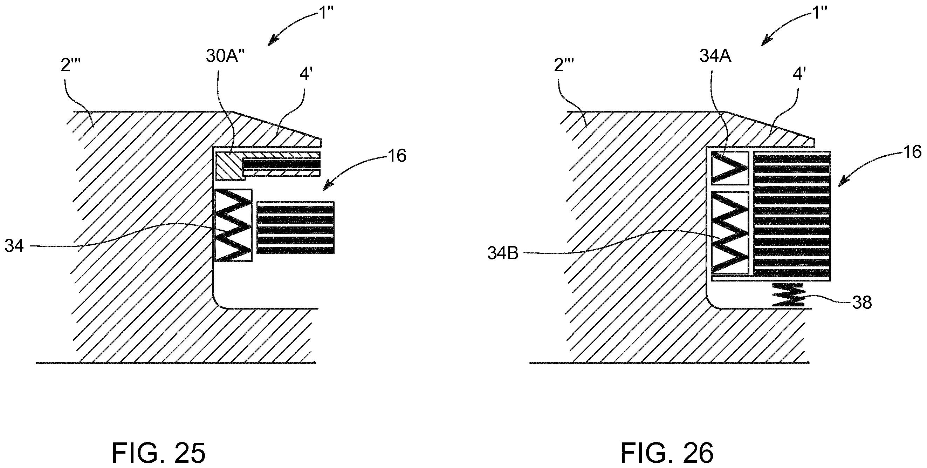

Figures 24 and 25 show different removable members 30A' and 30A", respectively. Both have curved outer surfaces like the removable members 30A, 30B shown in Figures 18 and 19. Removable member 30A' shown in Figure 24 includes an anti-slip groove for receiving the conductive strip 20 during the winding process. Removable member 30A" shown in Figure 25 has a two-part construction and provides full side support to the conductive strip 20 during the winding process to prevent it from flexing. Similar support can be provided by a tool 36 like the one shown in Figure 22, for example.

Figure 26 shows two coil support members 34A, 34B arranged one on top of the other. The radially outer coil support member 34A can be positioned on the pole body 2'" after the removable members (e.g., removable members 30A, 30B) have been removed. The radially inner coil support member 34B would be the support member onto which the partially-formed coil is moved during the winding process. In Figure 26, the coil 16 is shown in its final mounting position adjacent the pole tip 4' as described in more detail above. The coil 16 is biased towards the pole tip 4' by a suitable biasing means (e.g., a spring stack 38) which is electrically isolated from the coil by suitable insulation.

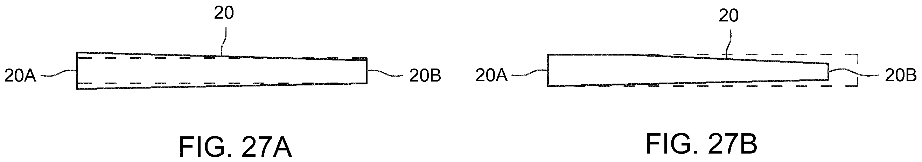

If the conductive strip 20 is wound around the various coil winding parts defined above without applying a tensioning force along its longitudinal axis, the thickness of the conductive strip will increase at the inner edge (i.e., the edge adjacent the pole body) as it bends around the curved end surfaces and the thickness of the conductive strip will decrease at the outer edge (i.e., the edge furthest away from the pole body). This is shown in Figure 27A where the dashed lines indicate the thickness of the conductive strip 20 *before* bending. It can be seen that after bending the inner edge 20A of the conductive strip 20 is thicker than it was before bending and the outer edge 20B is thinner than it was before bending. This extra thickness at the inner edge 20A of the conductive strip 20 is undesirable because it increases the overall size of the coil. The increased thickness at the inner edge of the conductive strip 20 can be avoided if a tensioning force is applied while it is bent around the pole body 2. This is shown in Figure 27B where again the dashed lines indicate the thickness of the conductive strip *before* bending. There is no increase in the thickness of the inner edge 20A of the conductive strip. But it can be seen that there is a decrease in the width of the conductive strip and an overall reduction in its cross-sectional area. This must be taken into account when providing support against radial acceleration. The resulting increase in coil resistance can also lead to an increase in localised heating and a reduction in current, hence a lower torque.

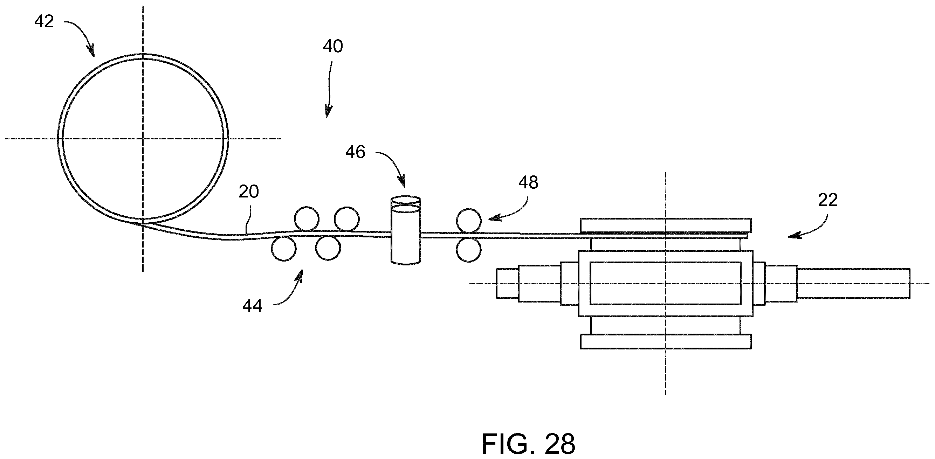

An example of a conductive strip feeding apparatus 40 is shown in Figure 28. The conductive strip feeding apparatus 40 remains stationary and the salient pole rotor 22 is rotated relative to it. The rotor 22 can be supported on a suitable platform or support (not shown) during the coil winding process. In another arrangement that is not shown, the rotor remains stationary and the conductive strip feeding apparatus is rotated relative to the rotor. During the coil winding process, the rotor 22 can move laterally and the conductive strip feeding apparatus can remain stationary, the conductive strip feeding apparatus can move laterally and the rotor 22 can remain stationary, or the coil can remain stationary on the pole body and the conductive strip feeding apparatus can feed the conductive strip to the right location.

The conductive strip 20 is supported on a spool 42 and supplied to the conductive strip feeding apparatus 40. The conductive strip feeding apparatus 40 includes a tensioning device (not shown) to selectively apply the tensioning force to the conductive strip 20. A straightening device 44 straightens the conductive strip 20 and a knurling device 46 knurls or textures at least one of the outer surfaces of the conductive strip to provide a larger convection area. A flattening device 48 flattens the conductive strip 20 before it is wound around the salient rotor pole of the rotor 22 under the control of a coil winding apparatus (not shown).

## Claims

1. A salient pole rotor for an electrical machine, the rotor comprising:
a longitudinal axis;
a plurality of salient poles, each pole (1) having a pole body (2) and an integral pole tip (4); and
a rotor winding with a plurality of coils (16), each coil (16) having a plurality of turns and being positioned on the pole body (2) of a respective salient pole (1);
wherein each pole body (2) includes a coil winding part (2A) having an outer profile around which the turns of the respective coil (16) are wound *in-situ* and a coil mounting part (2B) on which the respective coil is at least partially mounted at a final mounting position by being moved along the pole body (2) from the coil winding part (2A) to the coil mounting part (2B);
wherein the coil mounting part (2B) has an outer profile that differs from the outer profile of the coil winding part (2A) in that the coil winding part (2A) includes an undercut (12A, 12B) and in that the coil mounting part (2B) does not include an undercut; and
wherein each turn of each coil (16) includes two substantially straight axially-extending sides orientated substantially parallel to the longitudinal axis of the rotor and an inner profile that differs from the outer profile of the coil winding part (2A).

2. A salient pole rotor according to claim 1, wherein the undercut (12A, 12B) of each pole body (2) extends along at least part of a side surface (8B) and at least part of an end surface (10B) of the coil winding part (2A), the side surface (8B) being orientated substantially parallel to the longitudinal axis of the rotor and the end surface (10B) being orientated substantially perpendicular to the longitudinal axis of the rotor.

3. A salient pole rotor according to claim 1 or claim 2, wherein the coil winding part (2A) of each pole body (2) is adjacent the respective pole tip (4) or adjacent a base of the pole body (2).

4. A salient pole rotor according to any preceding claim, wherein there is a void between each coil (16) and the respective pole body (2) that is filled with insulation material, non-insulation material, or a combination thereof.

5. A salient pole rotor according to any preceding claim, wherein each coil (16) is positioned adjacent the respective pole tip (4).

6. A salient pole rotor according to any preceding claim, wherein each coil (16) is a strip-on-edge coil with a plurality of turns stacked so that the narrow surfaces of the strip are orientated substantially parallel to the axis of the pole body (2) and its broad surfaces are facing each other.

7. A method of winding a strip-on-edge coil (16) having a plurality of turns positioned on a salient pole (1) of a salient pole rotor for an electrical machine, the rotor comprising a longitudinal axis, and the salient pole (1) having a pole body (2) and an integral pole tip (4), wherein the pole body (2) includes a coil winding part (2A) having an outer profile around which the turns of the coil (16) are wound *in-situ* and a coil mounting part (2B) on which the coil is at least partially mounted at a final mounting position, wherein the coil mounting part (2B) has an outer profile that differs from the outer profile of the coil winding part (2A) in that the coil winding part (2A) includes an undercut (12A, 12B) that extends along at least part of a side surface (8A, 8B) and at least part of an end surface (10A,10B) of the coil winding part (2A), the side surface being orientated substantially parallel to the longitudinal axis of the rotor and the end surface being orientated substantially perpendicular to the longitudinal axis of the rotor, and in that the coil mounting part (2B) does not include an undercut, the method comprising the steps of:
forming each turn of the coil (12) by winding a conductive strip around the coil winding part (2A) of the pole body (2) *in-situ* and forcing the conductive strip into the undercut (12A, 12B); and
after each turn has been wound around the coil winding part (2A), moving the turn together with any previously formed turns radially with respect to the longitudinal axis of the rotor and along the pole body (2) to free up the undercut (12A, 12B);
wherein each turn includes two substantially straight axially-extending sides orientated substantially parallel to the longitudinal axis of the rotor and an inner profile that differs from the outer profile of the coil winding part (2A); and
wherein the turns are stacked so that narrow surfaces of the strip are orientated substantially parallel to the axis of the pole body (2) and broad surfaces of the strip are facing each other.

## Patentansprüche

1. Schenkelpolrotor für eine elektrische Maschine, wobei der Rotor umfasst:
eine Längsachse;
eine Vielzahl von Einzelpolen, wobei jeder Pol (1) einen Polkörper (2) und eine integrierte Polspitze (4) aufweist; und
eine Rotorwicklung mit einer Vielzahl von Spulen (16), wobei jede Spule (16) eine Vielzahl von Windungen aufweist und auf dem Polkörper (2) eines jeweiligen Einzelpols (1) positioniert ist;
wobei jeder Polkörper (2) ein Spulenwicklungsteil (2A) mit einem äußeren Profil aufweist, um das die Windungen der jeweiligen Spule (16) *in-situ* gewickelt sind, und ein Spulenmontageteil (2B), auf dem die jeweilige Spule zumindest teilweise in einer endgültigen Montageposition montiert ist, indem sie entlang des Polkörpers (2) von dem Spulenwicklungsteil (2A) zu dem Spulenmontageteil (2B) bewegt wird;
wobei das Spulenmontageteil (2B) ein äußeres Profil aufweist, das sich von dem äußeren Profil des Spulenwicklungsteil (2A) insofern unterscheidet, als dass das Spulenwicklungsteil (2A) eine Hinterschneidung (12A, 12B) beinhaltet, und insofern, als dass das Spulenmontageteil (2B) keine Hinterschneidung beinhaltet; und
wobei jede Windung jeder Spule (16) zwei im Wesentlichen gerade, sich axial erstreckende Seiten beinhaltet, die im Wesentlichen parallel zu der Längsachse des Rotors ausgerichtet sind, und ein inneres Profil, das sich von dem äußeren Profil des Spulenwicklungsteils (2A) unterscheidet.

2. Schenkelpolrotor nach Anspruch 1, wobei sich die Hinterschneidung (12A, 12B) jedes Polkörpers (2) entlang zumindest eines Teils einer Seitenfläche (8B) und zumindest einem Teil einer Endfläche (10B) des Spulenwicklungsteils (2A) erstreckt, wobei die Seitenfläche (8B) im Wesentlichen parallel zu der Längsachse des Rotors und der Endfläche (10B) ausgerichtet ist, im Wesentlichen senkrecht zu der Längsachse des Rotors ausgerichtet.

3. Schenkelpolrotor nach Anspruch 1 oder Anspruch 2, wobei das Spulenwicklungsteil (2A) jedes Polkörpers (2) angrenzend zu der jeweiligen Polspitze (4) oder angrenzend zu einer Basis des Polkörpers (2) ist.

4. Schenkelpolrotor nach einem der vorstehenden Ansprüche, wobei ein Hohlraum zwischen jeder Spule (16) und dem jeweiligen Polkörper (2) vorhanden ist, der mit Isoliermaterial, Nicht-Isoliermaterial oder einer Kombination davon gefüllt ist.

5. Schenkelpolrotor nach einem der vorstehenden Ansprüche, wobei jede Spule (16) angrenzend zu der jeweiligen Polspitze (4) positioniert ist.

6. Schenkelpolrotor nach einem der vorstehenden Ansprüche, wobei jede Spule (16) eine Band-auf-Kante-Spule mit einer Vielzahl von Windungen ist, die derart gestapelt sind, dass die engen Flächen des Bandes im Wesentlichen parallel zu der Achse des Polkörpers (2) ausgerichtet sind und seine breiten Flächen sich zugewandt sind.

7. Verfahren zum Wickeln einer Band-auf-Kante-Spule (16) mit einer Vielzahl von Windungen, die auf einem Einzelpol (1) eines Schenkelpolrotors für eine elektrische Maschine positioniert ist, wobei der Rotor eine Längsachse umfasst, und der Einzelpol (1) einen Polkörper (2) und eine integrierte Polspitze (4) aufweist, wobei der Polkörper (2) ein Spulenwicklungsteil (2A) mit einem äußeren Profil aufweist, um das die Windungen der Spule (16) *in-situ* gewickelt sind, und ein Spulenmontageteil (2B), auf dem die Spule zumindest teilweise in einer endgültigen Montageposition montiert ist, wobei das Spulenmontageteil (2B) ein äußeres Profil aufweist, das sich von dem äußeren Profil des Spulenwicklungsteils (2A) insofern unterscheidet, als dass das Spulenwicklungsteil (2A) eine Hinterschneidung (12A, 12B) beinhaltet, die sich zumindest teilweise entlang einer Seitenfläche (8A, 8B) und zumindest teilweise einer Endfläche (10A, 10B) des Spulenwicklungsteils (2A) erstreckt, wobei die Seitenfläche im Wesentlichen parallel zu der Längsachse des Rotors ausgerichtet ist und die Endfläche im Wesentlichen senkrecht zu der Längsachse des Rotors ausgerichtet ist, und insofern, als dass das Spulenmontageteil (2B) keine Hinterschneidung beinhaltet, wobei das Verfahren die Schritte umfasst:
Bilden jeder Windung der Spule (12) durch Wickeln eines leitfähigen Bandes um das Spulenwicklungsteil (2A) des Polkörpers (2) *in-situ* und Einpressen des leitfähigen Bandes in die Hinterschneidung (12A, 12B); und
nachdem jede Windung um das Spulenwicklungsteil (2A) gewickelt wurde, Bewegen der Windung zusammen mit jedweden zuvor gebildeten Windungen radial relativ zu der Längsachse des Rotors und entlang des Polkörpers (2), um die Hinterschneidung (12A, 12B) freizugeben;
wobei jede Windung zwei im Wesentlichen gerade, sich axial erstreckende Seiten beinhaltet, die im Wesentlichen parallel zu der Längsachse des Rotors ausgerichtet sind, und ein inneres Profil, das sich von dem äußeren Profil des Spulenwicklungsteils (2A) unterscheidet; und
wobei die Windungen derart gestapelt sind, dass enge Flächen des Bandes im Wesentlichen parallel zu der Achse des Polkörpers (2) ausgerichtet sind, und breite Flächen des Bandes einander zugewandt sind.

## Revendications

1. Rotor à pôles saillants pour une machine électrique, le rotor comprenant :
un axe longitudinal ;
une pluralité de pôles saillants, chaque pôle (1) ayant un corps de pôle (2) et une pointe de pôle intégrée (4) ; et
un enroulement de rotor présentant une pluralité de bobines (16), chaque bobine (16) ayant une pluralité de spires et étant positionnée sur le corps de pôle (2) d'un pôle saillant (1) respectif ;
dans lequel chaque corps de pôle (2) inclut une partie d'enroulement de bobine (2A) ayant un profil externe autour duquel les spires de la bobine (16) respective sont enroulées *in situ* et une partie de montage de bobine (2B) sur laquelle la bobine respective est au moins partiellement montée au niveau d'une position de montage finale en étant déplacée le long du corps de pôle (2) de la partie d'enroulement de bobine (2A) à la partie de montage de bobine (2B) ;
dans lequel la partie de montage de bobine (2B) a un profil externe qui diffère du profil externe de la partie d'enroulement de bobine (2A) en ce que la partie d'enroulement de bobine (2A) inclut un dégagement (12A, 12B) et en ce que la partie de montage de bobine (2B) n'inclut pas de dégagement ; et
dans lequel chaque spire de chaque bobine (16) inclut deux côtés s'étendant axialement sensiblement droits orientés sensiblement parallèlement à l'axe longitudinal du rotor et un profil interne qui diffère du profil externe de la partie d'enroulement de bobine (2A).

2. Rotor à pôles saillants selon la revendication 1, dans lequel le dégagement (12A, 12B) de chaque corps de pôle (2) s'étend le long d'au moins une partie d'une surface latérale (8B) et d'au moins une partie d'une surface d'extrémité (10B) de la partie d'enroulement de bobine (2A), la surface latérale (8B) étant orientée sensiblement parallèlement à l'axe longitudinal du rotor et la surface d'extrémité (10B) étant orientée sensiblement perpendiculairement à l'axe longitudinal du rotor.

3. Rotor à pôles saillants selon la revendication 1 ou la revendication 2, dans lequel la partie d'enroulement de bobine (2A) de chaque corps de pôle (2) est adjacente à la pointe de pôle (4) respective ou adjacente à une base du corps de pôle (2).

4. Rotor à pôles saillants selon l'une quelconque des revendications précédentes, dans lequel il existe un vide entre chaque bobine (16) et le corps de pôle (2) respectif qui est rempli de matériau isolant, de matériau non isolant, ou d'une combinaison de ceux-ci.

5. Rotor à pôles saillants selon l'une quelconque des revendications précédentes, dans lequel chaque bobine (16) est positionnée adjacente à la pointe de pôle (4) respective.

6. Rotor à pôles saillants selon l'une quelconque des revendications précédentes, dans lequel chaque bobine (16) est une bobine de type bande sur bord présentant une pluralité de spires empilées de sorte que les surfaces étroites de la bande sont orientées sensiblement parallèlement à l'axe du corps de pôle (2) et ses surfaces larges sont face les unes aux autres.

7. Procédé d'enroulement d'une bobine de type bande sur bord (16) ayant une pluralité de spires positionnée sur un pôle saillant (1) d'un rotor à pôles saillants pour une machine électrique, le rotor comprenant un axe longitudinal, et le pôle saillant (1) ayant un corps de pôle (2) et une pointe de pôle intégrée (4), dans lequel le corps de pôle (2) inclut une partie d'enroulement de bobine (2A) ayant un profil externe autour duquel les spires de la bobine (16) sont enroulées *in situ et* une partie de montage de bobine (2B) sur laquelle la bobine est au moins partiellement montée au niveau d'une position de montage finale, dans lequel la partie de montage de bobine (2B) a un profil externe qui diffère du profil externe de la partie d'enroulement de bobine (2A) en ce que la partie d'enroulement de bobine (2A) inclut un dégagement (12A, 12B) qui s'étend le long d'au moins une partie d'une surface latérale (8A, 8B) et d'au moins une partie d'une surface d'extrémité (10A,10B) de la partie d'enroulement de bobine (2A), la surface latérale étant orientée sensiblement parallèlement à l'axe longitudinal du rotor et la surface d'extrémité étant orientée sensiblement perpendiculairement à l'axe longitudinal du rotor, et en ce que la partie de montage de bobine (2B) n'inclut pas de dégagement, le procédé comprenant les étapes de :
formation de chaque spire de la bobine (12) par enroulement d'une bande conductrice autour de la partie d'enroulement de bobine (2A) du corps de pôle (2) *in situ* et insertion forcée de la bande conductrice dans le dégagement (12A, 12B) ; et
après que chaque spire a été enroulée autour de la partie d'enroulement de bobine (2A), déplacement de la spire conjointement avec toutes spires formées précédemment radialement par rapport à l'axe longitudinal du rotor et le long du corps de pôle (2) pour libérer le dégagement (12A, 12B) ;
dans lequel chaque spire inclut deux côtés s'étendant axialement sensiblement droits orientés sensiblement parallèlement à l'axe longitudinal du rotor et un profil interne qui diffère du profil externe de la partie d'enroulement de bobine (2A) ; et
dans lequel les spires sont empilées de sorte que les surfaces étroites de la bande sont orientées sensiblement parallèlement à l'axe du corps de pôle (2) et les surfaces larges de la bande sont face les unes aux autres.
